(19) **Europäisches Patentamt**
**European Patent Office**
**Office européen des brevets**

(11) **EP 4 131 085 A1**

(12) **EUROPEAN PATENT APPLICATION**

(43) Date of publication:
**08.02.2023 Bulletin 2023/06**

(51) International Patent Classification (IPC):
***G06N 10/00*** *(2019.01)*

(21) Application number: **21189425.8**

(52) Cooperative Patent Classification (CPC):
**G06N 10/60;** G06N 10/20

(22) Date of filing: **03.08.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Algorithmiq Oy**
**00160 Helsinki (FI)**

(72) Inventors:
• **Pérez, Guillermo García**
**20100 Turku (FI)**

• **Maniscalco, Sabrina**
**20100 Turku (FI)**
• **Rossi, Matteo**
**20100 Turku (FI)**
• **Sokolov, Boris**
**20100 Turku (FI)**

(74) Representative: **Leinweber & Zimmermann Patentanwalts-PartG mbB**
**European Patent Attorneys**
**Viktualienmarkt 8**
**80331 München (DE)**

(54) **METHOD FOR ESTIMATING A VALUE OF AN OBSERVABLE QUANTITY OF A STATE OF A QUANTUM MANY-BODY SYSTEM AND APPARATUS FOR CARRYING OUT SAID METHOD**

(57) The present invention relates to a method for estimating a value of an observable quantity of a state of a quantum many-body system, and to an apparatus for carrying out said method (Fig. 2).

Fig. 2

Processed by Luminess, 75001 PARIS (FR)

**Description**

The present invention is related to a method for estimating a value of an observable quantity of a state of a quantum many-body system, and to an apparatus for carrying out said method.

The ability to measure a value of an observable quantity of a state of a quantum many-body system is of fundamental importance in many areas, including the field of quantum computation and quantum information theory. Quantum many-body systems comprising a register of N two-level systems, so-called qubits, are of particular importance in these areas, as they may serve as a platform for quantum computation and quantum simulation. Generally, such applications may comprise the preparation of the qubit register in a desired initial state followed by a controlled evolution of said system and a measurement of an observable quantity associated with a Hermitian operator O. In this way, it may be possible to solve computational problems that are intractable using classical computers.

One important application of quantum computation is computational chemistry. There, Noisy Intermediate-Scale Quantum (NISQ) computers are expected to enable solving some real-world problems far more efficiently than classical ones. One of the most promising approaches in that direction is to use the Variational Quantum Eigensolver (VQE) algorithm to enhance quantum chemistry simulations of strongly correlated systems. However, VQE still faces several challenges, mainly due to its inefficiency. In particular, it has been shown in "Identifying challenges towards practical quantum advantage through resource estimation: the measurement roadblock in the variational quantum eigensolver" by J.F. Gonthier et.al., arXiv:2012:04001 that the number of measurements required for useful applications, albeit scaling polynomially, can easily become intractable.

A Hermitian operator O associated with an observable quantity has a spectral decomposition, $O = \sum_m m P_m$, wherein $P_m$ is the projector onto the eigenspace of O with eigenvalue m. Upon measuring the quantum state represented by the state vector $|\psi\rangle$, the probability of getting the measurement outcome m is given by $p(m) = \langle\psi|P_m|\psi\rangle$. In general it is not possible to measure the operator O directly in its eigenbasis. For example, if one is interested in finding a ground state of a Hamiltonian H, measuring in its eigenbasis requires solving the problem itself in advance.

Thus, one possible measurement protocol comprises writing the operator O as a sum of K Pauli strings $P_k$, O

$= \sum_k c_k P_k$, wherein $P_k = \bigotimes_{i=1}^{N} \sigma_{k_i}^{(i)}$. Here

$$\sigma_0^{(i)} = \mathbb{1}$$

is the identity, $\sigma_1^{(i)} = \sigma_x^{(i)}$ is the Pauli x-matrix, $\sigma_2^{(i)} = \sigma_y^{(i)}$ is the Pauli y-matrix and $\sigma_3^{(i)} = \sigma_z^{(i)}$ is the Pauli z-matrix acting on the qubit $q_i$. Then, the expectation value of the operator O is determined by measuring the operators corresponding to the Pauli strings $P_k$ and by approximating the expectation value by the mean values of the measurement outcomes. While this method works in principle, it is far from being optimal, as the error in the estimation is given by $\varepsilon$

$= \sqrt{\sum_k |c_k|^2 \mathrm{Var}(P_k)/S_k}$, wherein $\mathrm{Var}(P_k) = \langle P_k^2 \rangle - \langle P_k \rangle^2$ is the variance of the Pauli string $P_k$ and $S_k$ is the number of measurements used to estimate the term $k$. In particular, given such a measurement scheme, even an exact ground state of a Hamiltonian H does not enjoy the so-called zero-variance property, and statistical fluctuations always remain finite and large.

Thus, measurement schemes have been developed in the past which aim at solving the problems mentioned above. In WO 2021/099428 A1 an improved measurement scheme for the implementation of a variational quantum algorithm, e.g., a VQE algorithm, is disclosed. The measurement scheme is adapted to a qubit state encoding a paired-electron unitary coupled cluster with double excitations ansatz state. In EP 3 822 870 A1 expectation values of Pauli strings are measured for a first variational state encoded in a qubit system. The measured data is used to classically compute expectation values of a second variational state, wherein said second variational state is obtainable from the first variational state via the application of a fermionic linear unitary operator. While these measurement schemes are advantageous for these cases compared to a general measurement scheme, they are adapted to special classes of variational quantum algorithms and/or a special class of variational ansatz states encoded in a qubit system. Thus, it is not expected that these measurement schemes will also be beneficial for measuring the value of an observable quantity of an arbitrary quantum many-body system.

In "Learning to measure: adaptive informationally complete POVMs for near term-quantum algorithms" by Guillermo Garcia-Perez et al., arXiv:2104.00569v1, an adaptive measurement scheme using positive operator-valued measures (POVM) is proposed. This measurement scheme may also be used in the implementation of a VQE on a quantum computer. A POVM is a generalized measurement scheme which includes the measurement schemes introduced above. The adaptive measurement scheme requires adding one ancillary qubit to each qubit of the qubit register and applying a two-qubit unitary operation between the qubit of the register and the associated ancillary qubit. This measurement scheme has a large overhead in terms of quantum resources, since it leads to a doubling of the number of qubits. Moreover, the typically limited connectivity layout of Noisy Intermediate-Scale Quantum (NISQ) computers may not allow the direct coupling of the qubits of the register with the ancillary qubits, resulting in increased circuit depths and errors. Furthermore, the practical implementation of an arbitrary two-qubit gate requires the application of several quantum gates available in the experimental setup, and may thus be resource-intensive and error-prone.

It is therefore an objective of the present invention to provide a method for estimating a value of an observable quantity of a state of a quantum many-body system and an apparatus for carrying out said method which are better adapted to NISQ computers.

According to a first aspect of the present invention, there is provided a method for estimating a value of an observable quantity of a state of a quantum many-body system, said state being encodable as a qubit state of a register of N qubits via an encoding operation, said observable quantity being associated with a Hermitian operator O acting on the qubit register, wherein said method comprises:

Providing a register of N qubits;

Associating to each qubit $q_j$, j=1, ..., N, an initial informationally complete local positive operator-valued measure representable by $M_j \geq 4$ positive operators $\Pi_{m_j}^{(j)}$, $m_j = 0,...,M_j - 1$ with respective measurement outcome $m_j$, the operators being parametrizable by an initial set of operator parameters;

Defining an estimator for said observable quantity and an associated statistical error function of said estimator as a function of said operator parameters and the possible measurement outcomes of the local positive operator-valued measures;

Iterating an adaptive measurement routine for optimizing the positive operators with respect to the statistical error function, wherein said adaptive measurement routine accepts said operator parameters as an input and comprises:

Implementing said informationally complete local positive operator-valued measures parametrized by the operator parameters received as an input on said qubit register to obtain a set of measurement data as an output; and

Data processing said measurement data, wherein said data processing comprises calculating a first value of the statistical error function given said operator parameters and said measurement data and determining new operator parameters parametrizing an informationally complete local positive operator-valued measure for each qubit $q_j$ as an input for the next iteration of the adaptive measurement routine, wherein said new operator parameters result in a smaller second value of the statistical error function given said measurement data than the first value,

wherein said iteration is repeated until a convergence rule is fulfilled;

Calculating a value of the estimator of the observable quantity given the measurement data and the operator parameters as an estimation of the value of the observable;

characterized in that implementing said informationally complete local positive operator-valued measures comprises for each round s of a given number S of rounds of measurements preparing the qubit register in an initial qubit state which is an encoding of said state of said quantum many-body system obtained via the encoding operation and applying a quantum circuit to said qubit state, said quantum circuit being representable as a quantum circuit which comprises only single-qubit operations determined by the operator parameters and projective measurements of the qubits onto the computational basis.

Within the framework of quantum mechanics, a state of a quantum many-body system may be described by a density operator p. The state of the quantum many-body system may be a pure state, i.e., $\rho = |\psi\rangle\langle\psi|$, or it may be a mixed state, i.e., $\rho = \sum_i p_i |\psi_i\rangle\langle\psi_i|$ wherein $|\psi\rangle$, resp. $|\psi_i\rangle$ is a state vector of a quantum system and $p_i \geq 0$, $\sum_i p_i = 1$. The quantum many-body system of the method according to the first aspect of the present invention may be a spin system, a bosonic system or a fermionic system, but it is not limited to this.

According to the first aspect of the present invention the state of said quantum many-body system is encodable as a qubit state of a register of N qubits via an encoding operation. A qubit register of N qubits is a system comprising N qubits, called system qubits. It may be understood as the quantum analog of the classical processor register.

The state of the quantum many-body system may be a state of a qubit system. For example, the state may be a qubit state of a quantum computation. As the state of the quantum many-body system is already a qubit state, no encoding operation is necessary. The state may be a variational state of a variational quantum algorithm, e.g. the VQE. The variational state may be encoded as a qubit state.

The method comprises providing a register of N qubits. A qubit is a quantum mechanical two-level system. One of the two states of the two-level system may be described by a state vector $|0\rangle$, and the other state may be described by a state vector $|1\rangle$. The two state vectors are orthonormal. They span the linear vector space of the qubit. The two states are also called computational basis. The two states may be, e.g., the ground state and an excited state of a quantum mechanical system.

The method further comprises associating to each qubit $q_j$, j=1, ..., N, an initial informationally complete local positive operator-valued measure (POVM) representable by $M_j \geq 4$ positive operators $\Pi_{m_j}^{(j)}$, $m_j = 0,...,M_j - 1$ with respective measurement outcome $m_j$, the operators being parametrizable by an initial set of operator parameters. The operators $\Pi_{m_j}^{(j)}$ are also called effects of the POVM. The effects $\Pi_{m_j}^{(j)}$ act on the qubit $q_j$.

A POVM is a defined by a set of positive operators $\{\Pi_m\}_{m=0}^{M-1}$ for which

$$\sum_{m=0}^{M-1} \Pi_m = \mathbb{1}.$$

When said POVM is measured on the quantum state p, the probability to obtain the outcome m is given by $\mathrm{Tr}[\rho\Pi_m]$. A POVM is informationally complete when the effects span the associated operator space.

The effects of the informationally complete local POVM associated to the qubit $q_j$ may be linearly dependent. Then, $M_j > 4$. The effects of the informationally complete local POVM associated to the qubit $q_j$ may also be linearly independent. Then, $M_j = 4$. In this case, the POVM is minimal.

An informationally complete POVM allows the reconstruction of the expectation value of any observable quantity from its measurement outcomes. In particular, as each local POVM is informationally complete, each operator $Q_j$ acting on one of the qubits $q_j$ is representable as a linear combination of the effects of the corresponding local POVM, $Q_j = \sum_{m_j=0}^{M_j-1} b_{jm_j}^{(j)} \Pi_{m_j}^{(j)}$ with coefficients $b_{jm_j}^{(j)}$. When the operator $Q_j$ is Hermitian, the coefficients $b_{jm_j}^{(j)}$ are real, Furthermore, informationally complete data may also be used to reconstruct the density matrix describing the state of the quantum many-body system.

The method is adapted for measuring a value of an observable quantity. The observable quantity is not limited as long as it may be associated to the measurement of a Hermitian operator O. For example, the observable quantity may be the energy of the quantum many-body system. In this case, the associated Hermitian operator is the Hamiltonian of the system.

Within the mathematical framework of quantum mechanics, the value of an observable quantity of a state of a quantum mechanical system described by a density operator $p$ is given by the expectation value $\langle O \rangle = \mathrm{Tr}[\rho O]$, where $O$ is the Hermitian operator associated with the observable quantity. Due to the probabilistic nature of the theory of quantum mechanics, the expectation value is determined in practice by measuring the Hermitian operator $O$ many times, and then calculating a value of an estimator given the obtained measurement data to obtain an estimate of the expectation value of $O$. The estimation is generally associated with a statistical error given by a statistical error function. The smaller the statistical error, the better is the approximation of the expectation value by the estimator and the obtained measurement data. Both the estimator and the statistical error function depend on the obtained measurement data and the underlying measurement scheme used to obtain said data. Thus, the method according to the first aspect of the present invention comprises defining an estimator for said observable quantity and an associated statistical error function of said estimator as a function of said operator parameters and the possible measurement outcomes of the local positive operator-valued measures.

As has been explained above, not every measurement scheme is optimal for measuring a specific Hermitian operator O, as the statistical error of the scheme may be large. Thus, the method according to the present invention further comprises iterating an adaptive measurement routine for optimizing the positive operators of the local POVMs with respect to the statistical error function. I.e., the adaptive measurement routine is used to determine local POVMs that allow to estimate the value of the observable quantity with a small statistical error.

To this end, the adaptive measurement routine accepts said operator parameters as an input, and comprises implementing said positive operator-valued measures parametrized by the operator parameters received as an input on said qubit register to obtain a set of measurement data as an output. The details on how the local POVMs are implemented will be given below.

The adaptive measurement routine further comprises data processing of the obtained measurement data. Said data processing comprises calculating a first value of the statistical error function given said operator parameters and said measurement data and determining new operator parameters parametrizing an informationally complete local positive operator-valued measure for each qubit $q_j$ as an input for the next iteration of the adaptive measurement routine. The new operator parameters are determined such that they result in a smaller second value of the statistical error function given said measurement data than the first value. The new operator parameters may be determined, e.g., via a gradient optimization of the statistical error function with respect to the operator parameters given the measurement data. The iteration of the adaptive measurement routine is repeated until a convergence rule is fulfilled.

In each iteration, only the operator parameters of one local POVM may be changed. Alternatively, the operator parameters of more than one local POVM may be changed in each iteration.

The method also comprises calculating a value of the estimator of the observable quantity given the measurement data and the operator parameters as an estimation of the value of the observable. This calculation may be performed after the iteration of the adaptive measurement routine is completed. The value of the estimator may be calculated using the measurement data obtained and the operator parameters used during the last iteration of the adaptive measurement routine. As each local POVM is informationally complete it is always possible to calculate a value of an estimator of the observable quantity.

Now, the implementation of the informationally complete local POVMs in the adaptive measurement routine will be explained. According to the method of the present invention, implementing said informationally complete local positive operator-valued measures comprises for each round s of a given number S of rounds of measurements preparing the qubit register in an initial qubit state which is an encoding of said state of said quantum many-body system obtained via the encoding operation. I.e., for each round s of the given number S of rounds of measurement, the initial qubit state is prepared in the qubit register. The state preparation may be achieved with current techniques in the field of state preparation in quantum computation applications. Then, a quantum circuit is applied to the prepared qubit state. A quantum circuit is representable by a collection of quantum gates and measurements applied to a qubit register. A quantum gate acting on k qubits is representable as a unitary transformation acting on the Hilbert space associated to the k qubits.

According to the method of the present invention, the quantum circuit is representable as a quantum circuit which comprises only single-qubit operations determined by the operator parameters and projective measurements of the qubits onto the computational basis. The single-qubit operations applied to the qubits may be the same for each round of measurement or they may be different for at least two rounds of measurements. A projective measurement onto the computational basis is described by the local projectors $|0\rangle\langle0|$ and $|1\rangle\langle1|$ of the qubit $q_j$ having basis states described by the state vectors $|0\rangle$ and $|1\rangle$.

A single-qubit operation may be represented as a unitary matrix acting on the single qubit state space spanned by the single qubit basis state vectors $|0\rangle = \begin{pmatrix} 1 \\ 0 \end{pmatrix}$ and $|1\rangle = \begin{pmatrix} 0 \\ 1 \end{pmatrix}$. A possible representation is given by

$$U(\varphi_0, \varphi_1, \varphi_2) = \begin{pmatrix} \cos(\varphi_0/2) & -e^{i\varphi_1}\sin(\varphi_0/2) \\ e^{i\varphi_2}\sin(\varphi_0/2) & e^{i(\varphi_1+\varphi_2)}\cos(\varphi_0/2) \end{pmatrix} \tag{1}$$

with real parameters $\varphi_0$, $\varphi_1$, $\varphi_2$. Thus, the operator parameters may comprise these parameters.

The quantum circuit may be realized using a gate-based quantum computing platform.

The method according to the first aspect of the present invention is based on the application of quantum circuits which comprise only single-qubit operations and projective measurements onto the computational basis. I.e., compared to the adaptive measurement scheme disclosed in arxiv:2104.00569v1, no ancillary qubits and no two-qubit operations are required. This leads to a decrease in the amount of required quantum resources, as only a qubit register, which allows for the encoding of the state of the quantum many-body systems in N qubits, is necessary. I. e, compared to the method of arxiv:2104.00569v1, only half of the number of qubits is necessary. Furthermore, the method requires only single-qubit unitary operations which are simpler to implement and less noisy than two-qubit operations. Furthermore, the method is platform-independent, given that implementing single-qubit unitaries is a universal feature in NISQ computers. Furthermore, the method may be applied to any quantum state which is encodable in a register of qubits. Thus, this method may also be used for states of variational quantum algorithms, e. g. the Variational Quantum Eigensolver.

According to one example of the method of the present invention for at least one qubit $q_j$ the associated local positive operator-valued measure may be minimal, i.e. $M_j = 4$. This requires a minimal number of effects for said qubit, and may thus lead to a minimal number of operator parameters. In this way, the adaptive measurement routine may require less resources compared to a POVM which is not minimal.

In one embodiment of the method according to the present invention, the informationally complete local positive operator-valued measure associated to at least one qubit $q_j$ may be representable by $2K_j$ positive operators

$$\left\{ \alpha_{k_j}^{(j)} U_{k_j}^{(j)\dagger} |x_j\rangle\langle x_j| U_{k_j}^{(j)} \right\}_{k_j=1,\ldots K_j, x_j=0,1},$$

$K_j \geq 3$, wherein $\left\{ \alpha_{k_j}^{(j)} \right\}_{k_j=1}^{K_j}$ is a first probability distribution and

$\left\{ U_{k_j}^{(j)} \right\}_{k_j=1}^{K_j}$ is a set of single-qubit unitary operations, said local positive operator-valued measure being parametrizable by operator parameters defining the probabilities $\alpha_{k_j}^{(j)}$ of the first probability distribution and the single-qubit unitary operations, and wherein implementing said positive operator-valued measure for the qubit $q_j$ may comprise for each round s of the S rounds of measurements sampling a value $k_j \in [1, K_j]$ according to the first probability distribution

$\left\{ \alpha_{k_j}^{(j)} \right\}_{k_j=1}^{K_j}$ and applying the single-qubit unitary operation $U_{k_j}^{(j)}$ corresponding to the sampled value $k_j$ to the respective qubit $q_j$ followed by a projective measurement of said qubit $q_j$ onto the computational basis resulting in a measurement outcome $x_j^{(s)} = 0$ or $x_j^{(s)} = 1$ in the s-th round of measurements .

In one special example of said embodiment, the informationally complete local positive operator-valued measure (POVM) associated to each of the qubits $q_j$ may be representable by operators

$$\left\{ \alpha_{k_j}^{(j)} U_{k_j}^{(j)\dagger} |x_j\rangle\langle x_j| U_{k_j}^{(j)} \right\}_{k_j=1,\ldots K_j, x_j=0,1}.$$ The respective first probability distributions and the respective sets of single-qubit unitary operations may be the same for all qubits or they may be different for at least two qubits. In particular, they may be different for all qubits.

The sampling of the value $k_j$ may be performed before the S rounds of measurement are carried out, or it may be performed during the S rounds of measurements. The sampling may be carried out, e. g., by using a classical computer.

For the qubit $q_j$, the application of the quantum circuit according to this embodiment indeed implements the POVM represented by the operators $\left\{ \alpha_{k_j}^{(j)} U_{k_j}^{(j)\dagger} |x_j\rangle\langle x_j| U_{k_j}^{(j)} \right\}_{k_j=1,\ldots K_j, x_j=0,1},$ as may be understood from the following:

For the s-th round of measurement a value $k_j \in [1, K_j]$ is sampled according to the probability distribution $\left\{ \alpha_{k_j}^{(j)} \right\}_{k_j=1}^{K_j},$

and then the single-qubit unitary operation $U_{k_j}^{(j)}$ with the sampled index $k_j$ is applied to the qubit $q_j$ followed by a projective measurement of said qubit $q_j$ onto the computational basis. I. e., a randomly sampled single-qubit operation is applied to the qubit $q_j$ followed by a projective measurement onto the computational basis states

$\left\{ |x_j\rangle\langle x_j| \right\}_{x_j=0}^{1} = \{ |0\rangle\langle 0|, |1\rangle\langle 1| \}$ of the qubit $q_j$. This is equivalent to a projective measurement with projectors

$\pi_{k_j,0} = U_{k_j}^{(j)\dagger} |0\rangle\langle 0| U_{k_j}^{(j)}$ and $\pi_{k_j,1} = U_{k_j}^{(j)\dagger} |1\rangle\langle 1| U_{k_j}^{(j)}$. Due to the sampling, different single-qubit unitary operations may be applied in different rounds of measurement. S rounds of measurements result, for the qubit $q_j$, in the

implementation of a local POVM described by the effects $\left\{\alpha_{k_j}^{(j)} U_{k_j}^{(j)\dagger} |x_j\rangle\langle x_j| U_{k_j}^{(j)}\right\}_{k_j=1,...,K_j, x_j=0,1}$. The probability to obtain the outcome $(k_j, x_j)$ is given by $p_{k_j, x_j} = \mathrm{Tr}\left[\alpha_{k_j}^{(j)} \pi_{k_j, x_j} \rho_j\right]$, wherein $\rho_j$ is the reduced density operator of the state of the qubit $q_j$. Since $K_j \geq 3$, it may be ensured that the local POVM is informationally complete.

Each first probability distribution $\left\{\alpha_{k_j}^{(j)}\right\}_{k_j=1}^{K_j}$ may be parametrized by $K_j - 1$ parameters $\phi_i \in [0, \pi/2]$ via $\left\{\alpha_{k_j}^{(j)} = y_{k_j}^2\right\}_{k_j=1}^{K_j}$, where $y_1 = \cos(\phi_1)$, $y_2 = \sin(\phi_1)\cos(\phi_2),...$, $y_{K_j-1} = \sin(\phi_1)\sin(\phi_2)...\sin(\phi_{K_j-2})\cos((\phi_{K_j-1})$, $y_{K_j} = \sin(\phi_1)\sin(\phi_2)...\sin(\phi_{K_j-2})\sin(\phi_{K_j-1})$, and each single-qubit unitary operation $U_{k_j}^{(j)}$ may be parametrized by three real parameters $\varphi_0^{(k_j)}$, $\varphi_1^{(k_j)}$ and $\varphi_2^{(k_j)}$ according to Equation (1). Thus, each local POVM is parametrizable by $4K_j - 1$ operator parameters. The operator parameters are updated in the adaptive measurement routine.

By using post-processing of the measurement outcomes $x_j^{(s)}$ obtained via the embodiment of the method explained above it is possible to implement further POVMs. In one embodiment, the informationally complete local positive operator-valued measure associated to at least one qubit $q_j$ may be representable by $M_j \geq 4$ positive operators

$$\Pi_{m_j}^{(j)} = \sum_{k_j=1}^{K_j} \sum_{x_j=0}^{1} P^{(j)}(m_j | k_j, x_j) \alpha_{k_j}^{(j)} U_{k_j}^{(j)\dagger} |x_j\rangle\langle x_j| U_{k_j}^{(j)},$$

wherein $\{\{P^{(j)}(m_j|k_j,x_j)\}_{m_j=0,...,M_j-1}\}_{k_j=1,...,K_j; x_j=0,1}$ is a set of $2K_j$ $M_j$-outcome conditional second probability distributions, said operator parameters further comprising parameters defining the probabilities $P^{(j)}(m_j|k_j,x_j)$, and implementing said positive operator-valued measure may comprise post-processing of the measurement outcome $x_j$, wherein said post-processing comprises sampling a value $m_j \in [0, M_j - 1]$ according to the second probability distribution $P^{(j)}(m_j|k_j,x_j)$ with $k_j$ being the sampled index of the applied single-qubit unitary operation and relabeling the measurement outcome $x_j$ as $m_j$.

Thus, for the qubit $q_j$, the local POVM representable by the effects $\Pi_{m_j}^{(j)} = \sum_{k_j=1}^{K_j} \sum_{x_j=0}^{1} P^{(j)}(m_j | k_j, x_j) \alpha_{k_j}^{(j)} U_{k_j}^{(j)\dagger} |x_j\rangle\langle x_j| U_{k_j}^{(j)}$ is implemented as follows: For the s-th round of measurement, the qubit register is prepared in the initial qubit state. A value $k_j \in [1, K_j]$ is sampled according to the probability distribution $\left\{\alpha_{k_j}^{(j)}\right\}_{k_j=1}^{K_j}$, and the single-qubit unitary operation $U_{k_j}^{(j)}$ with the sampled value $k_j$ is applied to the qubit $q_j$ followed by a projective measurement of said qubit $q_j$ onto the computational basis. This results in a measurement outcome $x_j$ for the respective qubit $q_j$. This measurement outcome is thus obtained using quantum computational means. Then, the measurement outcome is post-processed. The post-processing may be carried out with the help of a classical computer. To this end, a value $m_j \in [0, M_j-1]$ is sampled according to the second probability distribution $P^{(j)}(m_j|k_j,x_j)$, wherein $x_j$ is the respective measurement outcome and $k_j$ is the index of the applied single-qubit unitary operation. These informationally complete POVMs are disclosed, e. g., in "Simulating positive operator-valued measures with projective measurements" by M. Oszmaniec et al., Physical Review Letters, 119, 190501 (2017).

The operator parameters parametrizing this local POVM may be as follows: Each probability distribution $\left\{\alpha_{k_j}^{(j)}\right\}_{k_j=1}^{K_j}$ may be parametrized by $K_j - 1$ parameters $\phi_i \in [0, \pi/2]$ as explained above, and each set of single-qubit unitary operations may be parametrized by 3 parameters $\varphi_0^{(k_j)}$, $\varphi_1^{(k_j)}$ and $\varphi_2^{(k_j)}$ as explained above. Furthermore, each second probability distribution $P^{(j)}(m_j|k_j,x_j)$ may be parametrized for fixed $k_j, x_j$ by $(M_j - 1)$ angles $\gamma_{k_j,x_j}^{n_j} \in [0, \pi/2]$

via
$$\left\{ P^{(j)}\left(m_j \middle| k_j, x_j\right) = \left(z_{k_j,x_j}^{m_j}\right)^2 \right\}_{m_j=0}^{M_j-1},$$
wherein
$$z_{k_j,x_j}^0 = \cos\left(\gamma_{k_j,x_j}^0\right),$$

$$z_{k_j,x_j}^1 = \sin\left(\gamma_{k_j,x_j}^0\right)\cos\left(\gamma_{k_j,x_j}^1\right), \ldots, z_{k_j,x_j}^{M_j-2} = \sin\left(\gamma_{k_j,x_j}^0\right)\sin\left(\gamma_{k_j,x_j}^1\right)\ldots\sin\left(\gamma_{k_j,x_j}^{M_j-3}\right)\cos\left(\gamma_{k_j,x_j}^{M_j-2}\right),$$

$$z_{k_j,x_j}^{M_j-1} = \sin\left(\gamma_{k_j,x_j}^0\right)\sin\left(\gamma_{k_j,x_j}^1\right)\ldots\sin\left(\gamma_{k_j,x_j}^{M_j-3}\right)\sin\left(\gamma_{k_j,x_j}^{M_j-2}\right).$$ Thus, the local POVM may be parametrizable

by $2K_j(M_j + 1) - 1$ operator parameters.

These local POVMs are generally non-projective POVMs. If one chooses $M_j = 4$ one may be able to ensure that the local POVM is a minimal informationaiiy complete POVM.

In one special example of said embodiment, the informationally complete local POVM associated to each of the qubits $q_j$ may be representable by $M_j \geq 4$ positive operators

$$\Pi_{m_j}^{(j)} = \sum_{k_j=1}^{K_j} \sum_{x_j=0}^{1} P^{(j)}\left(m_j \middle| k_j, x_j\right) \alpha_{k_j}^{(j)} U_{k_j}^{(j)\dagger} |x_j\rangle\langle x_j| U_{k_j}^{(j)}.$$ The respective first probability distributions, the respective second probability distributions and the respective sets of single-qubit unitary operations may be the same for all qubits or they may be different for at least two qubits. In particular, they may be different for all qubits.

In one possible embodiment of the present invention, implementing said positive operator-valued measures may comprise sampling, for the at least one qubit $q_j$, S values $k_j^{(1)}, \ldots, k_j^{(S)} \in [1, K_j]$ according to the first probability

distribution $\left\{\alpha_{k_j}^{(j)}\right\}_{k_j=1}^{K_j}$ and defining a batch of S quantum circuits, wherein in the s-th quantum circuit the single-qubit unitary operation $U_{k_j^{(s)}}^{(j)}$ with the sampled value $k_j^{(s)}$ is applied to the qubit $q_j$ followed by a projective measurement of said qubit onto the computational basis, and implementing said positive operator-valued measure further comprises applying the s-th quantum circuit in the s-th round of the measurement routine . Such an embodiment may be particularly useful when the qubit register is part of a quantum computing platform which is only remotely accessible. Then, the sampling of the values $k_j$ may be performed, e.g., on a classical computer. Furthermore, the batch of quantum circuits may be defined using a classical computer. The batch of quantum circuits may then be sent to the location of a quantum computer, where the quantum circuits are applied one by one to the initial qubit state.

The method according to the first aspect of the present invention comprises computational steps that may be carried out on a quantum computer by using a register of qubits and applying a quantum circuit to said qubit register. Furthermore, the method according to the first aspect of the present invention comprises further computational steps, like data processing of the measurement data, calculating a value of an estimator or post-processing as explained above. In one embodiment of the method according to the first aspect of the present invention, said post-processing and/or said data processing and/or said calculating of a value of the estimator may be carried out using a classical computing system. The classical computing system may comprise, but is not limited to, a central processing unit (CPU), a graphical processing unit (GPU), application-specific integrated circuits (ASICS) and a field-programmable gate array (FPGA). However, the method is not limited to this, and these computational steps may also be carried out by another means, e.g., by using a quantum computer.

In one embodiment of the method according to the present invention, said convergence rule may be fulfilled when the first value of the statistical error function is smaller than a first threshold value. The first threshold value may be determined in advance. Alternatively, the convergence rule may be fulfilled when the first value of the statistical error function is the same value to some accuracy for a given number of iterations.

The method of the first aspect of the present invention comprises calculating the value of an estimator of the observable quantity. In one embodiment, said data processing may comprise calculating the value of the estimator of the observable quantity. I.e., a value of the observable quantity may be calculated at each iteration of the adaptive measurement routine. Alternatively, the value of the estimator may only be calculated once the convergence rule is fulfilled.

In one embodiment of the method according to the present invention, an i-th iteration of said adaptive measurement routine may comprise defining an initial average value of the estimator $\overline{O}_{av,i}$ and an initial average value of the associated statistical error function $\overline{E}_{av,i}$, said initial average value of the estimator being the value $\overline{O}_i$ of the estimator and the initial average value of the statistical error function being the first value $\overline{E}_i$ of the statistical error function calculated in the i-th iteration of the adaptive measurement routine, and wherein for each iteration g>i, said measurement routine may comprise defining a new average value of the estimator $\overline{O}_{av,g} = (\overline{O}_g \overline{E}_{av,g-1} + \overline{O}_{av,g-1}\overline{E}_g)/(\overline{E}_g + \overline{E}_{av,g-1})$ and a new average value of the statistical error function $\overline{E}_{av,g} = \overline{E}_{av,g-1}\overline{E}_g/(\overline{E}_{av,g-1} + \overline{E}_g)$, wherein $\overline{O}_g$ is the value of the estimator and $\overline{E}_g$ is the value of the statistical error function calculated in the g-th iteration, and wherein the final estimated value of the observable quantity may be defined as the new average value of the estimator once the convergence rule is fulfilled. This embodiment of the method according to the first aspect of the present invention uses the intermediate values of the estimator and the statistical error function to calculate a weighted average such that the resulting statistical error is minimized. In this way, all measurement results obtained during the intermediate POVM optimization steps are used for the construction of the estimated value of the observable quantity. More details regarding this optimization are disclosed in arxiv:2104.00569v1, Chapter III C, the entire content of which is incorporated by reference.

For the embodiment described above, said convergence rule may be fulfilled when the new average value of the statistical error function is smaller than a second threshold value.

The method according to the first aspect of the present invention requires calculating the value of an estimator of the observable quantity. In one embodiment, said Hermitian operator associated to said observable 0 may be decomposable in terms of Pauli operators, $O = \sum_{i_1,\dots,i_N=0}^{3} c_{i_1\dots i_N} \sigma_{i_1}^{(1)} \otimes \dots \otimes \sigma_{i_N}^{(N)}$, with $\sigma_{i_j}^{(j)}$ being a Pauli operator acting on the qubit $q_j$, said Pauli operator being representable as $\sigma_{i_j}^{(j)} = \sum_{m_j=0}^{M_j-1} b_{i_j m_j}^{(j)} \Pi_{m_j}^{(j)}$, and the estimator may be a function of $\omega_{m_1\dots m_N} = \sum_{i_1,\dots,i_N=0}^{3} c_{i_1\dots i_N} b_{i_1 m_1}^{(1)} \dots b_{i_N m_N}^{(N)}$, wherein $m_j$ is the measurement outcome of the implementation of the local positive operator-valued measure associated to the qubit $q_j$, and in particular the estimator may be of the form $\overline{O} = \frac{1}{S}\sum_{s=1}^{S} \omega_{m_1^{(s)}\dots m_N^{(s)}}$, wherein $m_j^{(s)}$ is the outcome of the s-th round of measurement.

This estimator may be understood as follows: As the local POVMs associated to the qubits of the register are all informationally complete, it is always possible to represent the Pauli operators $\sigma_{i_j}^{(j)}$ acting on the qubit $q_j$ via the effects of the local POVM according to $\sigma_{i_j}^{(j)} = \sum_{m_j=0}^{M_j-1} b_{i_j m_j}^{(j)} \Pi_{m_j}^{(j)}$ with coefficients $b_{i_j m_j}^{(j)}$. Thus, the expectation value of the operator O for the quantum state p may be rewritten as $\langle 0 \rangle = \mathrm{Tr}[\rho 0] = \sum_{m_1,\dots,m_N} \omega_{m_1\dots m_N} \mathrm{Tr}\left[\rho \otimes_{j=1}^{N} \Pi_{m_j}^{(j)}\right] = \sum_{m_1,\dots,m_N} \omega_{m_1\dots m_N} p_{m_1\dots m_N}$, wherein $p_{m_1\dots m_N}$ is the probability to obtain the measurement outcome $(m_1,\dots,m_N)$. Implementing the local POVMs via iteratively applying a quantum circuit to the initial qubit state corresponds to sampling from the probability distribution $\{p_{m_1\dots m_N}\}$ resulting in a sequence of outcomes $(m_1^{(s)}\dots m_N^{(s)})$ for the s-th round of measurement, and an estimator of the observable O is given by $\overline{O} = \frac{1}{S}\sum_{s=1}^{S} \omega_{m_1^{(s)}\dots m_N^{(s)}}$. Each term $\omega_{m_1^{(s)}\dots m_N^{(s)}}$ is calculable in polynomial time in the number of Pauli strings on a classical computer. In this way, the weighted average of all Pauli strings is estimated simultaneously by exploiting the informationally complete data obtained from the application of the informationally complete POVM. In this way, state tomography which requires a number of measurements which is exponential in in the number of qubits and which requires storing data representing an exponentially large density matrix is prevented.

Given the estimator above, the statistical error function may be a function of the second moment of $\omega_{m_1\dots m_N}$

over the probability distribution $\{p_{m_1...m_N}\}$ to obtain the measurement outcome $(m_1,...,m_N)$. For example, the statistical error function may be a function of the variance of $\omega_{m_1...m_N}$ over the probability distribution $\{p_{m_1...m_N}\}$ In one example, the statistical error function may be the variance of $\omega_{m_1...m_N}$ over the probability distribution $\{p_{m_1...m_N}\}$ For example, the

$$\frac{1}{S}\sum_{s=1}^{S} \omega_{m_1^{(s)}...m_N^{(s)}}^2 - \left(\frac{1}{S}\sum_{s=1}^{S} \omega_{m_1^{(s)}...m_N^{(s)}}\right)^2.$$

statistical error function may be of the form $\overline{E}=$

The method according to the first aspect of the present invention may be used for any state of a quantum many-body system that is encodable in a qubit state of a register of N qubits. In one embodiment, said quantum many-body system may be describable by a fermionic Hamiltonian of N modes, in particular by a Hamiltonian of the form $H_f=$

$\sum_{p,q=1}^{N} h_{pq} a_p^\dagger a_q + \frac{1}{2}\sum_{p,q,r,s=1}^{N} u_{pqrs} a_p^\dagger a_q^\dagger a_r a_s,$ wherein $a_p^\dagger$ is a fermionic creation operator creating a fermionic particle in mode p, and $a_p$ is the corresponding fermionic annihilation operator. Such Hamiltonians are well known, e.g., in the field of condensed matter physics, solid state physics and quantum chemistry, and they are used to describe, among others, strongly interacting fermionic quantum many-body systems, like superconductors and Mott insulators as well as molecules. Furthermore, such Hamiltonians are of importance in the field of drug design and the modelling of proteins.

In the case that said quantum many-body system is a fermionic system said encoding operation may be the Jordan-Wigner transformation or the Bravyi-Kitaev mapping or the JKMN mapping or the Parity mapping, but it is not limited to one of these mappings. The JKMN mapping is disclosed in Z. Ziang, A. Kalev, W. Mruczkiewicz and H. Neven "Optimal fermion-to-qubit mapping via ternary trees with applications to reduced quantum state learning", Quantum 4, 276 (2020), the entire content of which is incorporated herein by reference. The Bravyi-Kitaev mapping is disclosed in "Fermionic quantum computation" by S. Bravyi and A. Kitaev, Annals of Physics, Vol. 298, Iss. 1 (2002), pp. 210 - 226, the entire content of which is incorporated herein by reference. The Parity mapping is disclosed in "The Bravyi-Kitaev transformation for quantum computation of electronic structure", by J. Seeley et al, J. Chem. Phys. 137, 224109 (2012), the entire content of which is incorporated by reference.

The qubit register used in the method according to the present invention may be any qubit system which allows for state preparation, the application of single-qubit operations and projective measurements. I. e., the method according to the first aspect of the present invention is implementable on different quantum computing platforms. In one embodiment, the qubits may be superconducting qubits. In this case, the method may be particularly useful, as quantum computation platforms with superconducting qubits may not allow the direct coupling of the qubits of the register with ancillary qubits. In other embodiments, the qubits may be ion qubits, or they may be photonic qubits. However, the invention is not limited to one of the qubits mentioned above.

According to a second aspect of the present invention, there is provided an apparatus for estimating a value of an observable quantity of a state of a quantum many-body system, said state being encodable as a qubit state of a register of N qubits via an encoding operation, said observable quantity being associated with a Hermitian operator O acting on the qubit register, wherein said apparatus comprises:

A register of N qubits;

State preparation means for preparing the qubit register in an initial qubit state which is an encoding of said state of said quantum many-body system obtained via the encoding operation;

Means for applying a quantum circuit to said qubit register, wherein said quantum circuit is representable as a quantum circuit which comprises only single-qubit operations and projective measurements of the qubits onto the computational basis;

Data processing means;

Control means, said control means being operative to iterate an adaptive measurement routine for optimizing positive operators with respect to a statistical error function, wherein said positive operators are defined by associating to each qubit $q_j$, j=1, ..., N, an initial informationally complete local positive operator-valued measure representable by

$M_j \geq 4$ positive operators $\Pi_{m_j}^{(j)}$, $m_j = 0,...,M_j - 1$ with respective measurement outcome $m_j$, the positive operators being parametrizable by an initial set of operator parameters and the statistical error function is given by defining an estimator for said observable quantity and an associated statistical error function of said estimator as a function of said operator parameters and the possible measurement outcomes of the local positive operator-valued measures;

wherein said adaptive measurement routine accepts said operator parameters as an input and comprises:

Implementing said positive operator-valued measures parametrized by the operator parameters received as an input on said qubit register to obtain a set of measurement data as an output, wherein implementing said positive operator-valued measures comprises for each round s of a given number S of rounds of measurements preparing the qubit register in an initial qubit state which is an encoding of said state of said quantum many-body system obtained via the encoding operation by using said state preparation means and applying a quantum circuit to said qubit state using said means for applying a quantum circuit, said quantum circuit being representable as a quantum circuit which comprises only single-qubit operations determined by the operator parameters and projective measurements of the qubits onto the computational basis;

Data processing said measurement data using said data processing means, wherein said data processing comprises calculating a first value of the statistical error function given said operator parameters and said measurement data and determining new operator parameters parametrizing an informationally complete local positive operator-valued measure for each qubit $q_j$ as an input for the next iteration of the measurement routine, wherein said new operator parameters result in a smaller second value of the statistical error function given said measurement data than the first value, wherein said iteration is repeated until a convergence rule is fulfilled;

Means for calculating a value of the estimator of the observable quantity given the measurement data and the operator parameters as an estimation of the value of the observable.

The apparatus according to the second aspect of the present invention is thus adapted to carry out the method according to the first aspect of the present invention. Everything that was said above in relation to the method also applies to the apparatus.

The means for calculating a value of the estimator may be or may comprise the data processing means, or the data processing means may comprise the means for calculating a value of the estimator. The means for calculating a value of the estimator and/or the data processing means may be a classical computing system. Thus, the apparatus according to the present invention may comprise a hybrid of a classical computing system and a quantum computer.

In the following description, the invention will be specified in greater detail by way of examples, with reference to the drawings. In the drawings,

Fig. 1      depicts a schematic exemplary embodiment of the apparatus according to the second aspect of the present invention which is adapted to carry out the method according to the first aspect of the present invention,

Fig. 1a     depicts a schematic representation of a qubit,

Fig. 2      depicts a flow diagram of an example of the method according to the first aspect of the present invention,

Fig. 3      depicts a graphical representation of a mapping from the electronic Hamiltonian of a molecule to a qubit Hamiltonian,

Fig. 4      depicts a schematic representation of the adaptive measurement routine according to an embodiment of the first aspect of the present invention,

Fig. 5      depicts numerical results for the estimation of the energy of a $H_2$ molecule according to the method of the present invention.

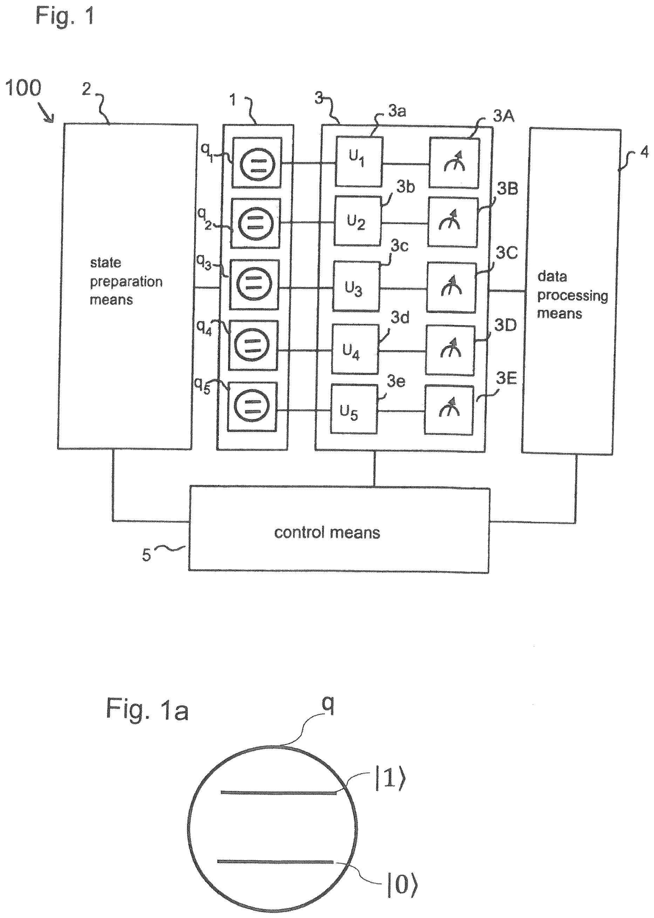

Fig 1. depicts a schematic exemplary embodiment of the apparatus 100 according to the second aspect of the present invention which is adapted to carry out the method according to the first aspect of the present invention. The apparatus 100 comprises a register 1 of N qubits $q_1, q_2, q_3, q_4, q_5$. In the example shown in Fig. 1, the register 1 comprises five qubits, $q_1, q_2, q_3, q_4, q_5$, but the apparatus according to the present invention is not limited to this, and there may be more or less than five qubits in the qubit register 1. The qubit register 1 may be realized by a quantum system of cold atoms, ions, photons or superconducting circuits, but is not limited to one of these realizations. Each qubit is a quantum mechanical two-level system describable by a local basis with state vectors $|0\rangle$ and $|1\rangle$. The state vector $|0\rangle$ may be associated to the ground state of the two-level system and the state vector $|1\rangle$ may be associated to an excited state of the two-level system (see Fig. 1a)

The apparatus 100 comprises state preparation means 2. The state preparation means 2 are adapted to prepare the qubits 1a, 1b, 1c, 1d, 1e of the qubit register 1 in an initial qubit state $\rho$.

Furthermore, the apparatus 100 comprises means 3 for applying a quantum circuit to said qubit register 1. The quantum circuit to be applied comprises only single-qubit operations and projective measurements of the qubits onto the computational basis. Thus, the means 3 comprises means for applying single-qubit operations $U_j$ 3a, 3b, 3c, 3d, 3e to each of the qubits $q_1$, $q_2$, $q_3$, $q_4$, $q_5$ and measurement means 3A, 3B, 3C, 3D, 3E for carrying out a projective measurement of each of the qubits onto the corresponding computational basis $|0\rangle$ and $|1\rangle$. I.e., the measurement means 3A, 3B, 3C, 3D, 3E is adapted to carry out a projective measurement onto the computational basis of each qubit given by local projectors $|0\rangle\langle 0|$ and $|1\rangle\langle 1|$. In this way, measurement data may be obtained.

The apparatus further comprises data processing means 4. The data processing means 4 is adapted to carry out several data processing operations that will be described in more detail below. In particular, the data processing means 4 may be in communication with the means 3 and receive the measurement data obtained by applying the quantum circuit to the initial qubit state as an input.

The apparatus 100 further comprises control means 5. The control means 5 may be in communication with the state preparation means 2, the means 3 for applying the quantum circuit and the data processing means 4. The control means 5 is operative to control the state preparation means 2, the means 3 for applying the quantum circuit and the data processing means 4 to carry out the method according to the first aspect of the present invention as will be described in more detail below. The control means 5 may comprise electronic data processing means.

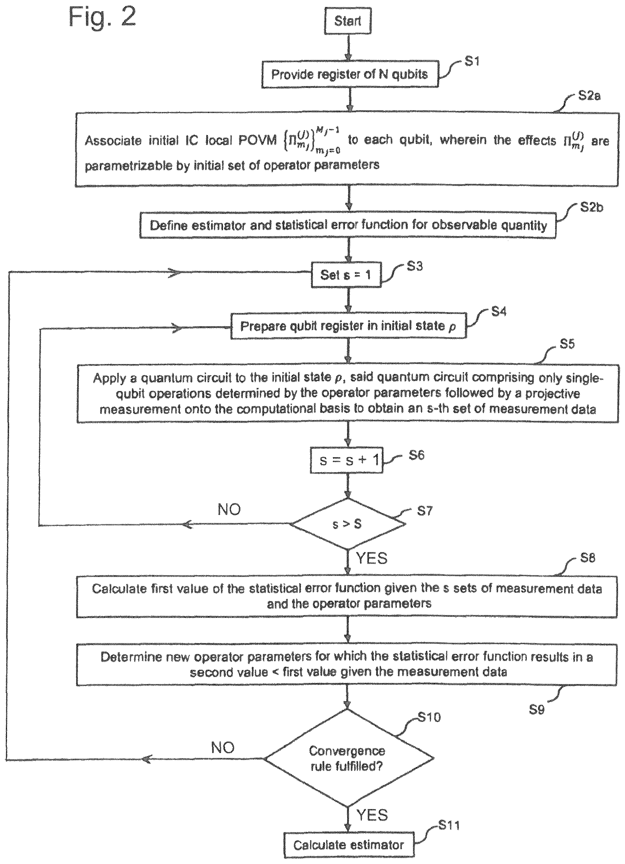

Fig. 2 depicts a flow diagram of the method according to the first aspect of the present invention. The method is adapted to estimate a value of an observable quantity of a state of a quantum many-body system. The quantum many-body system and the respective state are not limited as long as said state is encodable as a qubit state of a register of N qubits via an encoding operation.

One possible application of said method is within the field of quantum chemistry. An overview of the current status of quantum hardware and algorithm theory in this field is presented in "How will quantum computers provide an industrially relevant computational advantage in quantum chemistry?" by V.E. Elfving et. al., arXiv:2009.12472.

In some industrially relevant applications of quantum chemistry one is interested in the properties of a molecule, e.g. its ground state energy, as a function of the positions of the nuclei, which may be modelled as point-like charges fixed in space within the so-called Born-Oppenheimer approximation. The electronic Hamiltonian in the first quantization is given by

$$H_{el} = -\sum_i \frac{\nabla_{r_i}^2}{2} - \sum_{i,j} \frac{Z_i}{|R_i - r_j|} + \sum_{i,j>i} \frac{Z_i Z_j}{|R_i - R_j|} + \sum_{i,j>i} \frac{1}{|r_i - r_j|} \, .$$

Here, $R_i$ and $Z_i$ are the coordinates and charges of the nuclei in the molecule, and $r_i$ are the coordinates of the electrons. This Hamiltonian assumes an infinite-dimensional Hilbert space. Typically, a second quantization picture is used, where a basis of the single-electron Hilbert space is defined in terms of a set of single-electron wave functions $\{\phi_q(x)\}$ where $x$ accounts for the position and spin degree of freedom. The Hamiltonian then becomes

$$H_f = \sum_{p,q} h_{pq} a_p^\dagger a_q + \frac{1}{2} \sum_{p,q,r,s} u_{pqrs} a_p^\dagger a_q^\dagger a_r a_s \, a_s \tag{2}$$

where $a_q^\dagger$ ($a_q$) is the fermionic creation (annihilation) operator of the state $\phi_q(x)$, and the coefficients $h_{pq}$ and $u_{pqrs}$ are given by

$$h_{pq} = \int dx\, \phi_p^*(x) \left( \frac{\nabla_r^2}{2} - \sum_{i,j} \frac{Z_i}{|R_i - r_j|} \right) \phi_q(x)$$

$$u_{pqrs} = \int dx_1 dx_2 \frac{\phi_p^*(x_1)\phi_q^*(x_2)\phi_s(x_1)\phi_r(x_2)}{|r_1 - r_2|}$$

The basis set is truncated to a finite number $N_O$ of wave functions, called spin-orbitals, $\{\phi_q(x)\}_{q=1}^{N_O}$ in order to make the calculation feasible. In general, the larger the number of spin orbitals the more accurate the prediction.

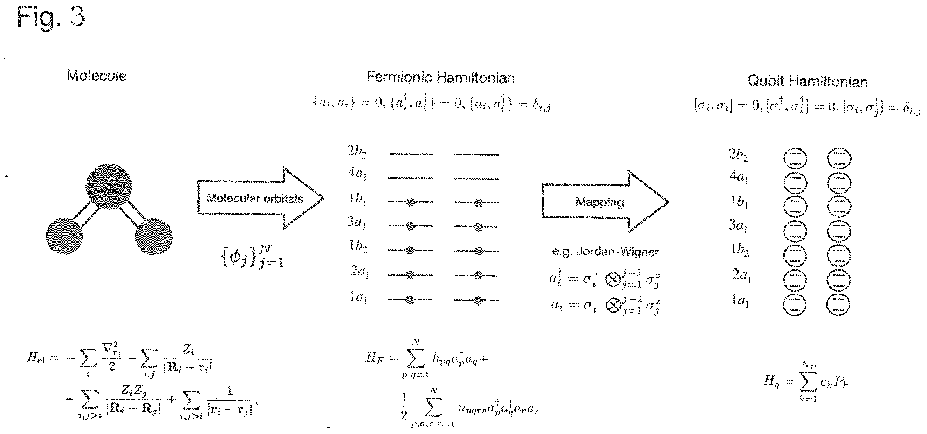

The second-quantized finite-dimensional description of the problem may be mapped to a system of $N=N_O$ qubits via so-called fermion-to-qubit mappings which allow an encoding of a state of a quantum many-body system governed by a fermionic Hamiltonian (e.g. its ground state or one of its excited states) in a system of N qubits. One example of such a mapping is the Jordan-Wigner transformation (JWT). There, the fermionic mode operators are ordered, and the mapping $a_i^\dagger = \sigma_i^+ \otimes_{j=1}^{i-1} \sigma_j^z$ is applied, wherein the ladder operator $\sigma_j^+$ acting on the qubit $q_j$ is defined by $\sigma_j^+ = \left(\sigma_j^x - i\sigma_j^y\right)/2.$ In the JWT, each spin-orbital is mapped to one specific qubit, where the state of the qubit directly represents the occupation of said orbital. By applying this mapping, every product of fermionic operators is mapped to a linear combination of Pauli strings, i.e., operators of the form $P_k = \otimes_{i=1}^N \sigma_{k_i}^{(i)}.$ For the example given above, another mapping may prove more useful. This mapping is presented in Z. Ziang, A. Kalev, W. Mruczkiewicz and H. Neven "Optimal fermion-to-qubit mapping via ternary trees with applications to reduced quantum state learning", Quantum 4, 276 (2020), the entire content of which is incorporated herein by reference. This mapping, which is also abbreviated as JKMN mapping, may be applied to the state of a quantum many-body system governed by the Hamiltonian above as well. In Fig. 3, the mapping from the electronic Hamiltonian to the qubit Hamiltonian is graphically represented for the case of the Jordan Wigner transformation as an example.

The observable quantity is associated with a Hermitian operator O acting on the qubit register. It is always possible to express this observable in terms of Pauli strings, $O = \sum_{i_1,...,i_N=0}^3 c_{i_1...i_N} \sigma_{i_1}^{(1)} \otimes ... \otimes \sigma_{i_N}^{(N)},$ with $\sigma_{i_j}^{(j)}$ being a Pauli operator acting on the qubit $q_j$. For example, the observable quantity may be the energy of the state of the quantum system, and the associated Hermitian operator is then the Hamiltonian of the quantum system.

The method comprises providing a register of N qubits (step S1). The method further comprises (step S2a) associating to each qubit $q_j$, j=1, ..., N, an initial informationally complete local positive operator-valued measure (POVM) representable by $M_j \geq 4$ positive operators $\Pi_{m_j}^{(j)}$, $m_j = 0,...,M_j - 1$ with respective measurement outcome $m_j$, the operators being parametrizable by an initial set of operator parameters. Possible parametrizations of the local POVMs were given above. The positive operators are also called effects. As the local POVMs are informationally complete, the Pauli operator acting on qubit $q_j$ may be expressed in terms of the effects as $\sigma_{i_j}^{(j)} = \sum_{m_j=0}^{M_j-1} b_{i_j m_j}^{(j)} \Pi_{m_j}^{(j)}$ with real parameters $b_{i_j m_j}^{(j)}.$

In step S2b of the method, an estimator for said observable quantity and an associated statistical error function of said estimator are defined as a function of said operator parameters and the possible measurement outcomes of the local positive operator-valued measures. The steps S2a and S2b may be interchanged. The estimator may be a function of $\omega_{m_1...m_N} = \sum_{i_1,...,i_N=0}^3 c_{i_1...i_N} b_{i_1 m_1}^{(1)} ... b_{i_N m_N}^{(N)}.$ In particular, the estimator may be of the form $\bar{O} = \frac{1}{S}\sum_{s=1}^S \omega_{m_1^{(s)}...m_N^{(s)}},$ wherein $(m_1^{(s)} ... m_N^{(s)})$ is the outcome of the s-iteration of the implementation of the positive operator-valued measures. The statistical error function may be a function of the second moment of $\omega_{m_1...m_N}$ over the probability distribution $\{p_{m_1...m_N}\}$ to obtain the measurement outcome $(m_1,...,m_N)$. For example, the statistical error function may be proportional to the variance of $\omega_{m_1...m_N}$ over the probability distribution $\{p_{m_1...m_N}\}$ to obtain the measurement outcome $(m_1,...,m_N)$. For example, the statistical error function may be said variance, i.e.

$$\bar{E} = \frac{1}{S}\sum_{s=1}^S \omega_{m_1^{(s)}...m_N^{(s)}}^2 - \left(\frac{1}{S}\sum_{s=1}^S \omega_{m_1^{(s)}...m_N^{(s)}}\right)^2.$$

At S3 a counter s for the S rounds of measurements is set to 1, s = 1. At S4, the qubit register is prepared in an initial qubit state p which is an encoding of said state of said quantum many-body system obtained via the encoding operation. The initial qubit state may be, e.g., an encoding of the ground state of the Hamiltonian given in Equation (2).

The initial qubit state may be prepared via techniques known in the art.

At S5, a quantum circuit is applied to said qubit state, said quantum circuit being representable as a quantum circuit which comprises only single-qubit operations determined by the operator parameters and projective measurements of the qubits onto the computational basis. In this way, the application of the local POVMs to the initial qubit state is implemented, and an s-th set of measurement data $\left(m_1^{(s)} \dots m_N^{(s)}\right)$ is obtained. Details of a possible quantum circuit will be explained in more detail below.

At S6, the counter s is increased by 1, s = s+1. Then, at S7 it is verified whether s > S, wherein S is the predetermined number of rounds of measurements. If the answer is NO, the method returns to S4. If the answer is YES, i.e., the quantum circuit has been applied for the desired number S of rounds of measurements to the qubit state p, the method proceeds to S8.

At S8, a first value of the statistical error function is calculated given the S sets of measurement data. Next, at S9, new operators are determined for which the statistical error function results in a second value given the measurement data, said second value being smaller than the first value. Details on how these new operator parameters may be determined will be given below. Then, at S10, it is verified whether a convergence rule is fulfilled. If the answer is NO, the method returns to S3. If the answer is YES, a value of the estimator is calculated at S11, and the method stops.

In the method according to the present invention it may also be possible to carry out step S10 (verifying whether a convergence rule is fulfilled) directly after step S8 (calculating the first value), and to determine the new operator parameters (step S9) only when the convergence rule is not fulfilled, and return then to step S3.

In the following, a special example of estimating a value of an observable quantity using a special set of Informationally complete POVMs will be explained.

### 1. The problem

Given is a state of a quantum many-body system. For illustrative purposes, said state is the ground state of a molecular Hamiltonian given in first quantization by

$$H_{el} = -\sum_i \frac{\nabla_{r_i}^2}{2} - \sum_{i,j} \frac{Z_i}{|R_i - r_j|} + \sum_{i,j>i} \frac{Z_i Z_j}{|R_i - R_j|} + \sum_{i,j>i} \frac{1}{|r_i - r_j|}$$

It is the goal to estimate the value of an observable quantity. Said observable quantity is associated to a Hermitian operator O. This problem will be solved with the help of a quantum computing platform and classical computational means. The classical computational means may comprise a classical computer.

### 2. Encoding operation

As was described in detail above, the first quantization Hamiltonian may be mapped to a second quantization Hamiltonian in which only N spin-orbitals are taken into account. This Hamiltonian is of the following form:

$$H_f = \sum_{p,q} h_{pq} a_p^\dagger a_q + \frac{1}{2} \sum_{p,q,r,s} u_{pqrs} a_p^\dagger a_q^\dagger a_r a_s$$

The ground state of this Hamiltonian may be represented as

$$|\Psi\rangle = \sum_{n_1,\dots,n_N=0}^{1} \psi_{n_1\dots n_N} \left(a_1^\dagger\right)^{n_1} \dots \left(c_N^\dagger\right)^{n_N} |0\rangle$$

with complex coefficients $\psi_{n_1\dots nN}$. This ground state may be mapped to a qubit state $\rho$, e.g., by a Jordan-Wigner transformation or any other fermion-to-qubit mapping, e. g. the JKMN mapping. Similarly, the Hermitian operator O associated to the observable quantity may be mapped to a qubit basis. The general form of this operator is then given by 0 =

$$\sum_k c_k P_k = \sum_{k_1,\dots,k_N=0}^{3} c_{k_1\dots k_N} \sigma_{k_1}^{(1)} \otimes \dots \otimes \sigma_{k_N}^{(N)},$$ with $\sigma_{k_j}^{(j)}$ being a Pauli operator acting on the qubit $q_j$. The observable quantity may be the ground state energy, and the associated Hermitian operator is then the Hamiltonian given above.

3. <u>Parametrization of the local POVMs</u>

The method comprises associating, to each qubit $q_j$, a local informationally complete (IC) POVM. In the specific example, the local IC POVM associated to the qubit $q_j$ is representable by the effects

$$\left\{ \Pi_{m_j}^{(j)} = \sum_{k_j=1}^{K_j} \sum_{x_j=0}^{1} P^{(j)}(m_j|k_j,x_j)\alpha_{k_j}^{(j)} U_{k_j}^{(j)\dagger}|x_j\rangle\langle x_j| U_{k_j}^{(j)} \right\}_{m_j=0}^{M_j-1},$$ $$\left\{ \alpha_{k_j}^{(j)} \right\}_{k_j=1}^{K_j}$$ wherein is a first probability distribution, $\left\{ U_{k_j}^{(j)} \right\}_{k_j=1}^{K_j}$ is a set of single-qubit unitary operations, $K_j \geq 3$, and $\{\{P^{(j)}(m_j|k_j,x_j)\}_{m_j=0,\dots,M_j-1}\}_{k_j=1,\dots,K_j;x_j=0,1}$ is a set of $2K_j$ $M_j$-outcome conditional second probability distributions with $M_j \geq 4$. Possible parametrizations of the first and second probability distributions and the single-qubit unitary operations were given above.

4. <u>Definition of the estimator and the statistical error function</u>

The general form of the Hermitian operator associated with the observable O is given by

$$O = \sum_k c_k P_k = \sum_{k_1,\dots,k_N=0}^{3} c_{k_1\dots k_N} \sigma_{k_1}^{(1)} \otimes \dots \otimes \sigma_{k_N}^{(N)},$$ with $\sigma_{k_j}^{(j)}$ being a Pauli operator acting on the qubit $q_j$. As the local POVMs associated to the qubits of the register are all informationally complete, it is always possible to represent the Pauli operators $\sigma_{i_j}^{(j)}$ acting on the qubit $q_i$ via the effects of the local POVM $\sigma_{i_j}^{(j)} = \sum_{m_j=0}^{M_j-1} b_{i_j m_j}^{(j)} \Pi_{m_j}^{(j)}$

with real coefficients $b_{i_j m_j}^{(j)}$. Thus, the expectation value of the operator O for the quantum state $\rho$ may be rewritten

as $$\langle O \rangle = \mathrm{Tr}[\rho O] = \sum_{m_1,\dots,m_N} \omega_{m_1\dots m_N} \mathrm{Tr}\left[ \rho \otimes_{j=1}^{N} \Pi_{m_j}^{(j)} \right] = \sum_{m_1,\dots,m_N} \omega_{m_1\dots m_N} p_{m_1\dots m_N},$$ wherein $p_{m_1\dots m_N}$

is the probability to obtain the measurement outcome $(m_1,\dots,m_N)$ and $\omega_{m_1\dots m_N} = \sum_{k_1,\dots,k_N} c_{k_1\dots k_N} \prod_{i=1}^{N} b_{k_i m_i}^{(i)}$.

Implementing the local POVMs via iteratively applying a quantum circuit to the initial qubit state corresponds to sampling from the probability distribution $\{p_{m_1\dots m_N}\}$ resulting in a sequence of outcomes $\left( m_1^{(s)}\dots m_N^{(s)} \right)$ for the s-th round of measurement, and an estimator of the observable O is given by $\bar{O} = \frac{1}{S}\sum_{s=1}^{S} \omega_{m_1^{(s)}\dots m_N^{(s)}}$. This estimator depends on the measurement data and the local POVMs.

The estimator $\bar{O}$ defined above converges to the expectation value (0) as $\sqrt{\mathrm{Var}(\omega_{m_1^{(s)}\dots m_N^{(s)}})/S}$, where

$\mathrm{Var}(\omega_{m_1^{(s)}\dots m_N^{(s)}})$ is the variance of $\omega_{m_1^{(s)}\dots m_N^{(s)}}$ over the probability distribution $\{p_{m_1\dots m_N}\}$. Thus, the statistical error function may be the variance, $\mathrm{Var}(\omega_{m_1^{(s)}\dots m_N^{(s)}})$ i.e., $\bar{E} = \frac{1}{S}\sum_{s=1}^{S} \omega_{m_1^{(s)}\dots m_N^{(s)}}^{2} - \left( \frac{1}{S}\sum_{s=1}^{S} \omega_{m_1^{(s)}\dots m_N^{(s)}} \right)^{2}.$

## 5. Adaptive measurement routine

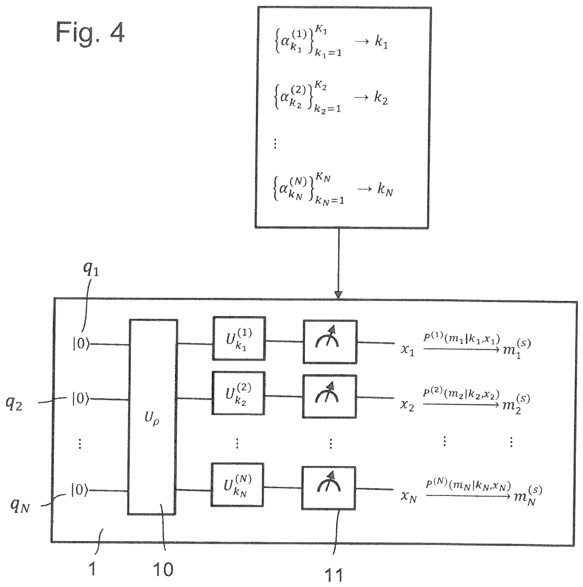

Next, the adaptive measurement routine is explained in detail with reference to Fig. 4. The adaptive measurement routine is a hybrid quantum-classical method that aims at optimizing the local POVMs used for measuring the observable quantity by minimizing the statistical error function of the estimator.

To this end, the following measurement routine is carried out S times on a qubit register 1 shown in Fig 4. Initially, all qubits $q_1, ..., q_N$ are in the state represented by the state vector $|0\rangle$, though the method it not limited to this. Then, the qubit register is prepared in the initial qubit state p which is an encoding of the ground state of $H_f$ (see point 2 above) in the qubit basis, as has been explained in detail under point 2 above. The present method is not limited to a special way of preparing that ground state. In one non-limiting example, a quantum circuit 10 for preparing said initial qubit state may be applied to the qubit register, said quantum circuit being represented by a unitary operator $U_\rho$.

Once the initial qubit state is prepared, the local POVMs are implemented on the initial qubit state. To this end, a quantum circuit comprising only single-qubit unitary operations $U_{k_1}^{(1)}, ..., U_{k_N}^{(N)}$ and projective measurements 11 onto the computational basis is applied to the initial qubit state. The single-qubit unitary operations depend on operator parameters of the local POVMs associated to each of the qubits in the following way:

For each qubit $q_j$, a value $k_j \in [1, K_j]$ is randomly sampled according to the associated probability distribution $\left\{\alpha_{k_j}^{(j)}\right\}_{k_j=1}^{K_j}$. This sampling may be performed using a classical computer. The sampling may be carried out before or after the initial state preparation. Then, the respective single-qubit unitary operation $U_{k_j}^{(j)}$ being chosen from the associated set of single-qubit unitary operations parametrized by the respective operator parameters and having the sampled value $k_j$ as an index is applied to the respective qubit $q_j$. Afterwards, a projective measurement onto the computational basis is applied to each qubit. This leads for each qubit $q_j$ to a measurement outcome $x_k = 0$ or $x_k = 1$. This quantum circuit is equivalent to a projective measurement with projectors $\pi_{k_j,0} = U_{k_j}^{(j)\dagger}|0\rangle\langle 0|U_{k_j}^{(j)}$ and $\pi_{k_j,1} = U_{k_j}^{(j)\dagger}|1\rangle\langle 1|U_{k_j}^{(j)}$.

I.e., the s-th application of the quantum circuit corresponds, for the qubit $q_j$, to a measurement with $2K_j$ possible outcomes described by the effects $\left\{\alpha_{k_j}^{(j)}\pi_{k_j,x_j}\right\}_{k_j=1,...K_j, x_j=0,1}$. The probability to obtain the outcome $(k_j, x_j)$ is given by $p_{k_j,x_j} = \text{Tr}\left[\alpha_{k_j}^{(j)}\pi_{k_j,x_j}\rho_j\right]$, wherein $\rho_j$ is the reduced density operator of the state of the qubit $q_j$.

The measurement outcomes are then post-processed. The post-processing may be carried out once all S rounds of measurements are completed. Alternatively, it may be carried out after each application of the quantum circuit. The post-processing may be carried out using a classical computer. For the post-processing, a value $m_j \in [0, M_j - 1]$ is randomly sampled according to the second probability distribution associated to the respective qubit $q_j$, $P^{(j)}(m_j|k_j, x_j)$ for each outcome $(k_j, x_j)$, and then the measurement outcome $x_j$ is relabeled by $m_j$. Thus, the s-th application of the quantum circuit leads to a set of measurement outcomes $\left(m_1^{(s)}, ..., m_N^{(s)}\right)$. In total, the cumulative result of applying the quantum circuit S times realizes, for each qubit $q_j$, the local POVM described by the effects

$$\Pi_{m_j}^{(j)} = \sum_{k_j=1}^{K_j}\sum_{x_j=0}^{1}P^{(j)}(m_j|k_j, x_j)\alpha_{k_j}^{(j)}U_{k_j}^{(j)\dagger}|x_j\rangle\langle x_j|U_{k_j}^{(j)}.$$

If one chooses $M_j = 4$ one may be able to ensure that the local POVM is a minimal informationally complete POVM.

Once the S sets of measurement data $\left\{\left(m_1^{(s)}, ..., m_N^{(s)}\right)\right\}_{s=1}^{S}$ is obtained, a first value of the statistical error function is calculated. This calculation may be performed on a classical computer. To this end, the quantity

$$\omega_{m_1^{(s)}...m_N^{(s)}} = \sum_{k_1,...,k_N} c_{k_1...k_N} \prod_{i=1}^N b^{(i)}_{k_i m_i^{(s)}}$$

is calculated for each of the s sets of measurement data, wherein the

coefficients $b^{(i)}_{k_i m_i}$ depend on the operator parameters of the local POVMs. Then, the statistical error function

$$\bar{E} = \frac{1}{S}\sum_{s=1}^S \omega^2_{m_1^{(s)}...m_N^{(s)}} - \left(\frac{1}{S}\sum_{s=1}^S \omega_{m_1^{(s)}...m_N^{(s)}}\right)^2$$

is calculated, resulting in a first value $\bar{E}_1 = \bar{E}$.

As the local POVMs are informationally complete, it is possible to make a prediction about the statistical error of other POVMs that were not implemented. To this end, one may define a new local informationally complete POVM

for the qubit $q_i$ determined by the effects $\Gamma^{(i)}_r$. As the local POVMs are informationally complete, one may express the new effects in terms of the old effects via $\Gamma^{(i)}_r = \sum_m d^{(i)}_{rm} \Pi^{(i)}_m$ with real coefficients $d^{(i)}_{rm}$. Further the local Pauli operators may be equally expressed in terms of these effects via $\sigma^{(j)}_{i_j} = \sum_{m_j=0}^{M_j-1} \tilde{b}^{(j)}_{i_j m_j} \Gamma^{(j)}_{m_j}$ with real coefficients

$\tilde{b}^{(j)}_{i_j m_j}$ and the Hermitian operator O may be expressed as $O = \sum_{r_1...r_N} \tilde{\omega}_{r_1...r_N} \otimes_{j=1}^N \Gamma^{(j)}_{r_j}$, wherein

$\tilde{\omega}_{r_1...r_N} = \sum_{k_1,...,k_N} c_{k_1...k_N} \prod_{i=1}^N \tilde{b}^{(i)}_{k_i r_i}$. The second value of the statistical error function may then be expressed in terms of the obtained measurement data as $\bar{E}_2 = \frac{1}{S}\sum_{s=1}^S \sum_{r_1,...,r_N} \tilde{\omega}^2_{r_1...r_N} \prod_{j=1}^N d^{(j)}_{r_j m_j^{(s)}} - \left(\frac{1}{S}\sum_{s=1}^S \omega_{m_1^{(s)}...m_N^{(s)}}\right)^2$.

In this way, one may approximate the gradient of the statistical error function and use a gradient optimization algorithm to obtain a new set of local POVMs which leads to a smaller variance than the local POVMs that are used to obtain the measurement data. For example, one may change only one of the local POVMs, e.g., the POVM associated to the qubit

$q_j$. Then, $d^{(i)}_{rm} = \delta_{rm} \; \forall \; i \neq j$. Then, the second value of the error function is given by

$$\bar{E}_2 = \frac{1}{S}\sum_{s=1}^S \sum_{r_j=0}^3 d^{(j)}_{r_j m_j} \tilde{\omega}^2_{m_1^{(s)}...m_{j-1}^{(s)} r_j m_{j+1}^{(s)}...m_N^{(s)}} - \left(\frac{1}{S}\sum_{s=1}^S \omega_{m_1^{(s)}...m_N^{(s)}}\right)^2$$.

In this way, it is possible to calculate all partial derivatives of the statistical error function and to carry out an optimization, e.g., via a gradient search. This allows to define a new local POVM associated to the qubit $q_j$ which leads to a smaller value of the statistical error function than the previous one. This new local POVM is parametrizable by new operator parameters. The new operator parameters are used as the input for the next iteration of the adaptive measurement routine. The adaptive measurement routine is repeated until a convergence rule is fulfilled. For example, the adaptive measurement routine is repeated until the first value of the statistical error function is smaller than a threshold value.

6. Calculation of the estimator

The method also comprises calculating a value of the estimator $O = \frac{1}{S}\sum_{s=1}^S \omega_{m_1^{(s)}...m_N^{(s)}}$. The calculation may be performed at each iteration of the adaptive measurement routine. This leads to intermediate results for the value of the estimator. Alternatively, it may be carried out once the adaptive measurement routine has terminated, i. e. when the convergence rule is fulfilled. This may lead to a final result of the estimator.

In case that the estimator is calculated for each iteration of the adaptive measurement routine, a more accurate value of the estimator may be achieved in the following way:

In the first iteration of the adaptive measurement routine a value $\bar{O}_1$ of the estimator and a corresponding value $\bar{E}_1$ of the statistical error function are calculated, as explained above. Then, one defines an initial average value of the estimator via $\bar{O}_{av,1} = \bar{O}_1$, and an initial average value of the statistical error function via $\bar{E}_{av,1} = \bar{E}_1$. Then, for each iteration g>i, one defines, after calculating the value of the estimator for this iteration, $\overline{O}_g$ and the first value of the statistical error function $\overline{E}_g$, a new average value of the estimator $\overline{O}_{av,g} = (\overline{O}_g\overline{E}_{av,g-1} + \overline{O}_{av,g-1}\overline{E}_q)/(\overline{E}_g + \overline{E}_{av,g-1})$ and a new average value of the statistical error function $\overline{E}_{av,g} = \overline{E}_{av,g-1}\overline{E}_g/(\overline{E}_{av,g-1} + \overline{E}_g)$, wherein $\overline{O}_g$ is the value of the estimator and $\overline{E}_g$ is the value of the statistical error function calculated in the g-th iteration, and wherein the final estimated value of the observable quantity is defined as the new average value of the estimator once the convergence rule is fulfilled. In this way, one obtains for each iteration s an estimated average value of the estimator that minimizes the overall error according to the statistical error function and the measured data. It has been proven that this iterative mixing of the measurement outcomes is unbiased. I. e., the $\overline{O}_{av}$ converges to the mean value.

Results for one example

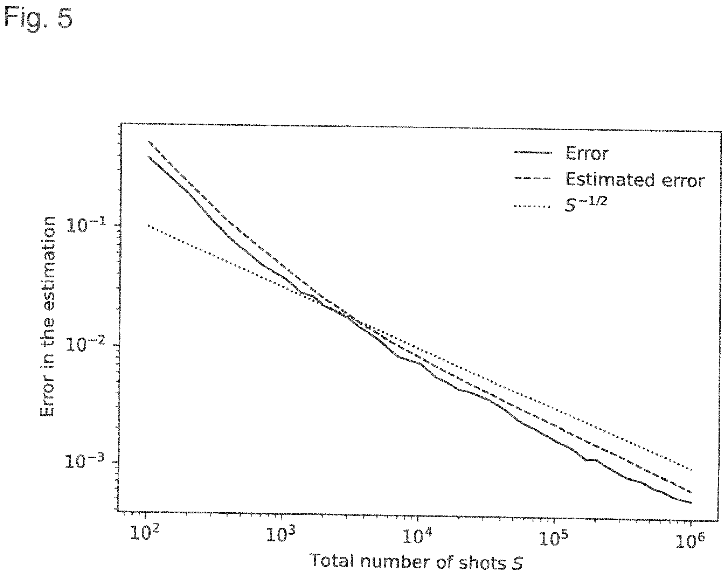

Fig. 5 depicts numerical results for the estimation of the energy of a $H_2$ molecule mapped into a 4-qubit Hamiltonian using the Parity fermion-to-qubit mapping disclosed in "The Bravyi-Kitaev transformation for quantum computation of electronic structure", by J. Seeley et al, J. Chem. Phys. 137, 224109 (2012). The method according to the present invention is applied to the approximated ground state of the system which is obtained after the application of a VQE algorithm. The solid line shows the error of the estimation $|\overline{O}_{av,g} - \langle O \rangle|$ as a function of the total number of rounds of measurements S averaged over 100 realizations wherein $\langle 0 \rangle$ is the expectation value of the operator O. The dashed line shows the estimated error, i.e. $\overline{E}_{av,g}$ at the end of the iteration. The dotted line indicates the scaling $S^{-1/2}$ which is achieved for a standard measurement scheme. The method according to the present invention approaches the exact value faster than $S^{-1/2}$.

**Claims**

1. Method for estimating a value of an observable quantity of a state of a quantum many-body system, said state being encodable as a qubit state of a register of N qubits via an encoding operation, said observable quantity being associated with a Hermitian operator O acting on the qubit register, wherein said method comprises:

    Providing a register of N qubits;
    Associating to each qubit $q_j$, j=1, ..., N, an initial informationally complete local positive operator-valued measure representable by $M_j \geq 4$ positive operators $\Pi^{(j)}_{m_j}$, $m_j = 0,...,M_j - 1$ with respective measurement outcome $m_j$, the operators being parametrizable by an initial set of operator parameters;
    Defining an estimator for said observable quantity and an associated statistical error function of said estimator as a function of said operator parameters and the possible measurement outcomes of the local positive operator-valued measures;
    Iterating an adaptive measurement routine for optimizing the positive operators with respect to the statistical error function, wherein said adaptive measurement routine accepts said operator parameters as an input and comprises:

        Implementing said informationally complete local positive operator-valued measures parametrized by the operator parameters received as an input on said qubit register to obtain a set of measurement data as an output;
        Data processing said measurement data, wherein said data processing comprises calculating a first value of the statistical error function given said operator parameters and said measurement data and determining new operator parameters parametrizing an informationally complete local positive operator-valued measure for each qubit $q_j$ as an input for the next iteration of the adaptive measurement routine, wherein said new operator parameters result in a smaller second value of the statistical error function given said measurement data than the first value,
        wherein said iteration is repeated until a convergence rule is fulfilled;
        Calculating a value of the estimator of the observable quantity given the measurement data and the operator parameters as an estimation of the value of the observable;
        **characterized in that** implementing said informationally complete local positive operator-valued measures comprises for each round s of a given number S of rounds of measurements preparing the qubit register in an initial qubit state which is an encoding of said state of said quantum many-body system obtained via the encoding operation and applying a quantum circuit to said qubit state, said quantum circuit being representable as a quantum circuit which comprises only single-qubit operations determined by the operator parameters and projective measurements of the qubits onto the computational basis.

2. Method according to claim 1, wherein for at least one qubit $q_j$ the associated local positive operator-valued measure is minimal.

3. Method according to claim 1 or 2, wherein the informationally complete local positive operator-valued measure associated to at least one qubit $q_j$ is representable by $2K_j$ positive operators $\left\{ \alpha_{k_j}^{(j)} U_{k_j}^{(j)\dagger} |x_j\rangle\langle x_j| U_{k_j}^{(j)} \right\}_{k_j=1,\dots K_j, x_j=0,1}$, $K_j \geq 3$, wherein $\left\{ \alpha_{k_j}^{(j)} \right\}_{k_j=1}^{K_j}$ is a first probability distribution and $\left\{ U_{k_j}^{(j)} \right\}_{k_j=1}^{K_j}$ is a set of single-qubit unitary operations, said local positive operator-valued measure being parametrizable by operator parameters defining the probabilities $\alpha_{k_j}^{(j)}$ of the first probability distribution and the single-qubit unitary operations, and wherein implementing said positive operator-valued measure for the qubit $q_j$ comprises for each round s of the S rounds of measurement sampling a value $k_j \in [1, K_j]$ according to the first probability distribution $\left\{ \alpha_{k_j}^{(j)} \right\}_{k_j=1}^{K_j}$ and applying the single-qubit unitary operation $U_{k_j}^{(j)}$ corresponding to the sampled value $k_j$ to the respective qubit $q_j$ followed by a projective measurement of said qubit $q_j$ onto the computational basis resulting in a measurement outcome $x_j^{(s)} = 0$ or $x_j^{(s)} = 1$ in the s-th round of measurement.

4. Method according to claim 3, wherein the informationally complete local positive operator-valued measure associated to at least one qubit $q_j$ is representable by $M_j \geq 4$ positive operators $\Pi_{m_j}^{(j)} = \sum_{k_j=1}^{K_j} \sum_{x_j=0}^{1} P^{(j)}(m_j|k_j, x_j) \alpha_{k_j}^{(j)} U_{k_j}^{(j)\dagger} |x_j\rangle\langle x_j| U_{k_j}^{(j)}$, wherein $\{\{P^{(j)}(m_j|k_j,x_j)\}_{m_j=0,\dots,M_j-1}\}_{k_j=1,\dots,K_j;x_j=0,1}$ is a set of $2K_j$ $M_j$-outcome conditional second probability distributions, said operator parameters further comprising parameters defining the probabilities $P^{(j)}(m_j|k_j,x_j)$, and implementing said positive operator-values measure comprises post-processing of the measurement outcome $x_j$, wherein said post-processing comprises sampling a value $m_j \in [0, M_j - 1]$ according to $P^{(j)}(m_j|k_j,x_j)$ with $k_j$ being the sampled index of the applied single-qubit unitary operation and relabeling the measurement outcome $x_j$ as $m_j$.

5. Method according to claim 3 or 4, wherein implementing said positive operator-valued measures comprises, for the at least one qubit $q_j$, sampling S values $k_j^{(1)}, \dots, k_j^{(S)} \in [1, K_j]$ according to the first probability distribution $\left\{ \alpha_{k_j}^{(j)} \right\}_{k_j=1}^{K_j}$ and defining a batch of S quantum circuits, wherein in s-th quantum circuit the single-qubit unitary operation $U_{k_j^{(s)}}^{(j)}$ with the sampled value $k_j^{(S)}$ is applied to the qubit $q_j$ followed by a projective measurement of said qubit onto the computational basis, and implementing said positive operator-valued measure further comprises applying the s-th quantum circuit in the s-th round of measurement.

6. Method according to anyone of the preceding claims, wherein said post-processing and/or said data processing and/or said calculating of a value of the estimator is carried out using a classical computing system.

7. Method according to anyone of the preceding claims, wherein said convergence rule is fulfilled when the first value of the statistical error function is smaller than a first threshold value.

8. Method according to anyone of the preceding claims, wherein said data processing comprises calculating the value of the estimator of the observable quantity.

9. Method according to claim 8, wherein an i-th iteration of said adaptive measurement routine comprises defining an initial average value of the estimator $\overline{O}_{av,i}$ and an initial average value of the associated statistical error function $\overline{E}_{av,i}$, said initial average value of the estimator being the value $\overline{O}_i$ of the estimator and the initial average value of the statistical error function being the first value $\overline{E}_i$ of the statistical error function obtained in the i-th iteration of the adaptive measurement routine, and wherein for each iteration g>i, said measurement routine comprises defining a new average value of the estimator $\overline{O}_{av,g} = (\overline{O}_g \overline{E}_{av,g-1} + \overline{O}_{av,g-1}\overline{E}_g)/ (\overline{E}_g + \overline{E}_{av,g-1})$ and a new average value of the statistical error function $\overline{E}_{av,g} = \overline{E}_{av,g-1}\overline{E}_g/(\overline{E}_{av,g-1} + \overline{E}_g)$, wherein $\overline{O}_g$ is the value of the estimator and $\overline{E}_g$ is the value of the statistical error function calculated in the g-th iteration, and wherein the final estimated value of the observable quantity is defined as the new average value of the estimator once the convergence rule is fulfilled.

10. Method according to claim 9, wherein said convergence rule is fulfilled when the new average value of the statistical error function is smaller than a second threshold value.

11. Method according to anyone of the preceding claims, wherein said Hermitian operator associated to said observable $\overline{O}$ is decomposable in terms of Pauli operators, $O = \sum_{i_1,\dots,i_N=0}^{3} c_{i_1\dots i_N}\sigma_{i_1}^{(1)} \otimes \dots \otimes \sigma_{i_N}^{(N)}$, with $\sigma_{i_j}^{(j)}$ being a Pauli operator acting on the qubit $q_j$, said Pauli operator being representable as $\sigma_{i_j}^{(j)} = \sum_{m_j=0}^{M_j-1} b_{i_j m_j}^{(j)} \Pi_{m_j}^{(j)}$, and wherein the estimator is a function of $\omega_{m1\dots mN}$ $\sum_{i_1,\dots,i_N=0}^{3} c_{i_1\dots i_N} b_{i_1 m_1}^{(1)} \dots b_{i_N m_N}^{(N)}$, wherein $m_j$ is the measurement outcome of the implementation of the local positive operator-valued measure associated to qubit $q_j$, and in particular the estimator is of the form $\bar{O} = \frac{1}{S}\sum_{s=1}^{S} \omega_{m_1^{(s)}\dots m_N^{(s)}}$, wherein $m_j^{(s)}$ is the outcome of the s-th round of measurement.

12. Method according to claim 11, wherein said statistical error function $\overline{\overline{E}}$ is a function of the second moment of $\omega_{m1\dots mN}$ over the probability distribution $\{p_{m_1\dots mN}\}$ to obtain the measurement outcome $(m_1,\dots,m_N)$, and in particular $\overline{\overline{E}} = \frac{1}{S}\sum_{s=1}^{S} \omega_{m_1^{(s)}\dots m_N^{(s)}}^2 - \left(\frac{1}{S}\sum_{s=1}^{S} \omega_{m_1^{(s)}\dots m_N^{(s)}}\right)^2$.

13. Method according to anyone of the preceding claims, wherein said quantum many-body system is describable by a fermionic Hamiltonian of N modes, in particular by a Hamiltonian of the form $H_F = \sum_{p,q=1}^{N} h_{pq} a_p^\dagger a_q + \frac{1}{2}\sum_{p,q,r,s=1}^{N} u_{pqrs} a_p^\dagger a_q^\dagger a_r a_s$, wherein $a_p^\dagger$ is a fermionic creation operator creating a fermionic particle in mode p, and $a_p$ is the corresponding fermionic annihilation operator.

14. Method according to anyone of the preceding claims, wherein said quantum many-body system is a fermionic system and said encoding operation is the Jordan-Wigner transformation or the Bravyi-Kitaev mapping or the JKMN mapping or the Parity mapping.

**15.** Method according to anyone of the preceding claims, wherein said qubits are superconducting qubits or ion qubits or photonic qubits.

**16.** Apparatus (100) for estimating a value of an observable quantity of a state of a quantum many-body system, said state being encodable as a qubit state of a register of N qubits via an encoding operation, said observable quantity being associated with a Hermitian operator O acting on the qubit register, wherein said apparatus (100) comprises:

A register (1) of N qubits;
State preparation means (2) for preparing the qubit register (1) in an initial qubit state which is an encoding of said state of said quantum many-body system obtained via the encoding operation;
Means (3) for applying a quantum circuit to said qubit register (1), wherein said quantum circuit is representable as a quantum circuit which comprises only single-qubit operations and projective measurements of the qubits onto the computational basis;
Data processing means (4);
Control means (5), said control means (5) being operative to iterate an adaptive measurement routine for optimizing positive operators with respect to a statistical error function, wherein said positive operators are defined by associating to each qubit $q_j$, j=1, ..., N, an initial informationally complete local positive operator-valued measure representable by $M_j \geq 4$ positive operators $\Pi^{(j)}_{m_j}$, $m_j = 0,...,M_j - 1$ with respective measurement outcome $m_j$, the positive operators being parametrizable by an initial set of operator parameters and the statistical error function is given by defining an estimator for said observable quantity and an associated statistical error function of said estimator as a function of said operator parameters and the possible measurement outcomes of the local positive operator-valued measures;

wherein said adaptive measurement routine accepts said operator parameters as an input and comprises:

Implementing said positive operator-valued measures parametrized by the operator parameters received as an input on said qubit register (1) to obtain a set of measurement data as an output, wherein implementing said positive operator-valued measures comprises for each round s of a given number S of rounds of measurements preparing the qubit register (1) in an initial qubit state which is an encoding of said state of said quantum many-body system obtained via the encoding operation by using the state preparation means (2) and applying a quantum circuit to said qubit state using said means (3) for applying a quantum circuit, said quantum circuit being representable as a quantum circuit which comprises only single-qubit operations determined by the operator parameters and projective measurements of the qubits onto the computational basis;
Data processing said measurement data using said data processing means (4), wherein said data processing comprises calculating a first value of the statistical error function given said operator parameters and said measurement data and determining new operator parameters parametrizing an informationally complete local positive operator-valued measure for each qubit $q_j$ as an input for the next iteration of the measurement routine, wherein said new operator parameters result in a smaller second value of the statistical error function given said measurement data than the first value, wherein said iteration is repeated until a convergence rule is fulfilled;
Means (4) for calculating a value of the estimator of the observable quantity given the measurement data and the operator parameters as an estimation of the value of the observable using the data processing means.

Fig. 1

Fig. 1a

# Fig. 2

Start

Provide register of N qubits — S1

Associate initial IC local POVM $\left\{\Pi_{m_j}^{(j)}\right\}_{m_j=0}^{M_j-1}$ to each qubit, wherein the effects $\Pi_{m_j}^{(j)}$ are parametrizable by initial set of operator parameters — S2a

Define estimator and statistical error function for observable quantity — S2b

Set s = 1 — S3

Prepare qubit register in initial state $\rho$ — S4

Apply a quantum circuit to the initial state $\rho$, said quantum circuit comprising only single-qubit operations determined by the operator parameters followed by a projective measurement onto the computational basis to obtain an s-th set of measurement data — S5

s = s + 1 — S6

s > S — S7    NO

YES

Calculate first value of the statistical error function given the s sets of measurement data and the operator parameters — S8

Determine new operator parameters for which the statistical error function results in a second value < first value given the measurement data — S9

Convergence rule fulfilled? — S10    NO

YES

Calculate estimator — S11

# Fig. 3

Molecule

Fermionic Hamiltonian

$$\{a_i, a_i\} = 0, \{a_i^\dagger, a_i^\dagger\} = 0, \{a_i, a_i^\dagger\} = \delta_{i,j}$$

Qubit Hamiltonian

$$[\sigma_i, \sigma_i] = 0, [\sigma_i^\dagger, \sigma_i^\dagger] = 0, [\sigma_i, \sigma_j^\dagger] = \delta_{i,j}$$

Molecular orbitals

$$\{\phi_j\}_{j=1}^N$$

$$2b_2 \quad \underline{\quad\quad} \quad \underline{\quad\quad}$$
$$4a_1 \quad \underline{\quad\quad} \quad \underline{\quad\quad}$$
$$1b_1 \quad \underline{\bullet\quad} \quad \underline{\bullet\quad}$$
$$3a_1 \quad \underline{\bullet\quad} \quad \underline{\bullet\quad}$$
$$1b_2 \quad \underline{\bullet\quad} \quad \underline{\bullet\quad}$$
$$2a_1 \quad \underline{\bullet\quad} \quad \underline{\bullet\quad}$$
$$1a_1 \quad \underline{\bullet\quad} \quad \underline{\bullet\quad}$$

Mapping

e.g. Jordan-Wigner

$$a_i^\dagger = \sigma_i^+ \bigotimes_{j=1}^{j-1} \sigma_j^z$$

$$a_i = \sigma_i^- \bigotimes_{j=1}^{j-1} \sigma_j^z$$

$$2b_2$$
$$4a_1$$
$$1b_1$$
$$3a_1$$
$$1b_2$$
$$2a_1$$
$$1a_1$$

$$H_{\text{el}} = -\sum_i \frac{\nabla_{\mathbf{r}_i}^2}{2} - \sum_{i,j} \frac{Z_i}{|\mathbf{R}_i - \mathbf{r}_i|}$$
$$+ \sum_{i,j>i} \frac{Z_i Z_j}{|\mathbf{R}_i - \mathbf{R}_j|} + \sum_{i,j>i} \frac{1}{|\mathbf{r}_i - \mathbf{r}_j|},$$

$$H_F = \sum_{p,q=1}^N h_{pq} a_p^\dagger a_q +$$
$$\frac{1}{2} \sum_{p,q,r,s=1}^N u_{pqrs} a_p^\dagger a_q^\dagger a_r a_s$$

$$H_q = \sum_{k=1}^{N_P} c_k P_k$$

EP 4 131 085 A1

Fig. 4

$$\left\{\alpha_{k_1}^{(1)}\right\}_{k_1=1}^{K_1} \rightarrow k_1$$

$$\left\{\alpha_{k_2}^{(2)}\right\}_{k_2=1}^{K_2} \rightarrow k_2$$

$$\vdots$$

$$\left\{\alpha_{k_N}^{(N)}\right\}_{k_N=1}^{K_N} \rightarrow k_N$$

$q_1$

$|0\rangle$ — $U_\rho$ — $U_{k_1}^{(1)}$ — 📐 — $x_1 \xrightarrow{P^{(1)}(m_1|k_1,x_1)} m_1^{(s)}$

$q_2$ $|0\rangle$ — $U_{k_2}^{(2)}$ — 📐 — $x_2 \xrightarrow{P^{(2)}(m_2|k_2,x_2)} m_2^{(s)}$

$\vdots$

$q_N$ $|0\rangle$ — $U_{k_N}^{(N)}$ — 📐 — $x_N \xrightarrow{P^{(N)}(m_N|k_N,x_N)} m_N^{(s)}$

1    10    11

Fig. 5

EP 4 131 085 A1

Europäisches
Patentamt

European
Patent Office

Office européen
des brevets

# EUROPEAN SEARCH REPORT

Application Number

EP 21 18 9425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUILLERMO GARCIA-PEREZ ET AL: "Learning to measure: adaptive informationally complete POVMs for near-term quantum algorithms", ARXIV.ORG, CORNELL UNIVERSITY LIBRARY, 201 OLIN LIBRARY CORNELL UNIVERSITY ITHACA, NY 14853, 1 April 2021 (2021-04-01), XP081931457, * page 1 - page 10, right-hand column, paragraph 2 * * Appendices A-E * | 1-16 | INV. G06N10/00 |
| A | US 2020/118025 A1 (ROMERO JHONATHAN [US] ET AL) 16 April 2020 (2020-04-16) * the whole document * | 1-16 | |
| A | NIKOLAJ MOLL ET AL: "Quantum optimization using variational algorithms on near-term quantum devices", ARXIV.ORG, CORNELL UNIVERSITY LIBRARY, 201 OLIN LIBRARY CORNELL UNIVERSITY ITHACA, NY 14853, 3 October 2017 (2017-10-03), XP081147319, DOI: 10.1088/2058-9565/AAB822 * the whole document * | 1-16 | |
| A | BAUMGRATZ T ET AL: "A scalable maximum likelihood method for quantum state tomography", NEW JOURNAL OF PHYSICS, INSTITUTE OF PHYSICS PUBLISHING, BRISTOL, GB, vol. 15, no. 12, 4 December 2013 (2013-12-04), page 125004, XP020254373, ISSN: 1367-2630, DOI: 10.1088/1367-2630/15/12/125004 [retrieved on 2013-12-04] * the whole document * | 1-16 | |

TECHNICAL FIELDS
SEARCHED    (IPC)

G06N

-/--

The present search report has been drawn up for all claims

| Place of search | Date of completion of the search | Examiner |
|---|---|---|
| The Hague | 27 January 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 21 18 9425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/372094 A1 (SHEHAB OMAR [US] ET AL) 26 November 2020 (2020-11-26) * the whole document * ----- | 1-16 | |

TECHNICAL FIELDS
SEARCHED    (IPC)

The present search report has been drawn up for all claims

| Place of search | Date of completion of the search | Examiner |
|---|---|---|
| The Hague | 27 January 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

page 2 of 2

## EP 4 131 085 A1

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2022

| Patent document cited in search report | Publication date | Patent family member(s) | Publication date |
|---|---|---|---|
| US 2020118025 A1 | 16-04-2020 | CA 3112594 A1 | 16-04-2020 |
| | | EP 3864586 A1 | 18-08-2021 |
| | | US 2020118025 A1 | 16-04-2020 |
| | | WO 2020077288 A1 | 16-04-2020 |
| US 2020372094 A1 | 26-11-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021099428 A1

- EP 3822870 A1

**Non-patent literature cited in the description**

- **J.F. GONTHIER.** Identifying challenges towards practical quantum advantage through resource estimation: the measurement roadblock in the variational quantum eigensolver. *arXiv:2012:04001*
- **GUILLERMO GARCIA-PEREZ et al.** Learning to measure: adaptive informationally complete POVMs for near term-quantum algorithms. *arXiv:2104.00569v1*
- **M. OSZMANIEC et al.** Simulating positive operator-valued measures with projective measurements. *Physical Review Letters,* 2017, vol. 119, 190501

- **Z. ZIANG ; A. KALEV ; W. MRUCZKIEWICZ ; H. NEVEN.** Optimal fermion-to-qubit mapping via ternary trees with applications to reduced quantum state learning. *Quantum,* 2020, vol. 4, 276
- **S. BRAVYI ; A. KITAEV.** Fermionic quantum computation. *Annals of Physics,* 2002, vol. 298 (1), 210-226
- **J. SEELEY et al.** The Bravyi-Kitaev transformation for quantum computation of electronic structure. *J. Chem. Phys.,* 2012, vol. 137, 224109